# EUROPEAN PATENT SPECIFICATION

(11) **EP 3 541 251 B1**
(45) Date of publication and mention of the grant of the patent: **11.11.2020**
(21) Application number: 17840596.5
(22) Date of filing: 14.11.2017
(51) Int. Cl.: A47J 31/36

(54) **INFUSER UNIT FOR COFFEE MACHINE**
BRÜHEINHEIT FÜR KAFFEEMASCHINE
UNITÉ D'INFUSION POUR MACHINE À CAFÉ

(30) Priority: 15.11.2016 IT 201600114980
(43) Date of publication of application: 25.09.2019
(73) Proprietor: De'Longhi Appliances S.r.l., 31100 Treviso (IT)
(72) Inventor: DE' LONGHI, Giuseppe, I-31100 Treviso (IT); MARCON, Davide, I-35015 Trebaseleghe (PD) (IT)
(74) Representative: Rapisardi, Mariacristina
(86) International application number: PCT/IT2017/000252
(87) International publication number: WO 2018/092169

(56) References cited:
- US-A1- 2010 236 417
- US-A1- 2014 373 724

## Description

The present invention relates to an infuser unit for a coffee machine.

The infuser unit to which reference is made is of the type having an infusion cylinder subjectable to a reversible roto-translational movement between a disengaged position and an engaged position with a closing piston for creating an infusion chamber into which the infusion water is conveyed heated by a boiler and conveyed through a specific channel inside the closing piston. The infusion cylinder has inside it an ejection piston that moves in a coordinated way with a scraper element for discharging the spent dose of coffee grounds.

In some versions of infuser units, the infusion chamber has an increased depth for being able to house a larger dose of coffee.

One of the drawbacks that can occur in this case comes from the maximum stroke limit of the ejection piston which can sometimes not be sufficient to guarantee the correct loading of the coffee dose into the infusion chamber for performing a dispensing cycle and/or the correct ejection of the coffee dose at the end of the dispensing cycle.

Known infuser units can sometimes be prone to excessive dimensions together with excessive structural complication actually due among other things to the various mechanisms used for moving the ejection piston in the infusion cylinder. An infuser unit describing the preamble of claim 1 is known from US2010/0236417.

The technical task of the present invention is, therefore, to provide an infuser unit for a coffee machine which obviates the above-described technical drawbacks of the prior art.

Within the context of this technical task an object of the invention is to provide an infuser unit for a coffee machine that can also correctly operate with an infusion chamber of suitable substantial depth.

Another object of the invention is to provide an infuser unit for a coffee machine that is structurally simple and compact.

The technical task, as well as these and other objects, according to the present invention, are reached by realising an infuser unit for a coffee machine comprising the features of claim 1.

Other important characteristics of the invention are highlighted in the dependent claims provided below.

Further characteristics and advantages of the invention will more fully emerge from the description of a preferred but not exclusive embodiment of the infuser unit according to the invention, illustrated by way of non-limiting example in the accompanying figures of the drawings, in which:

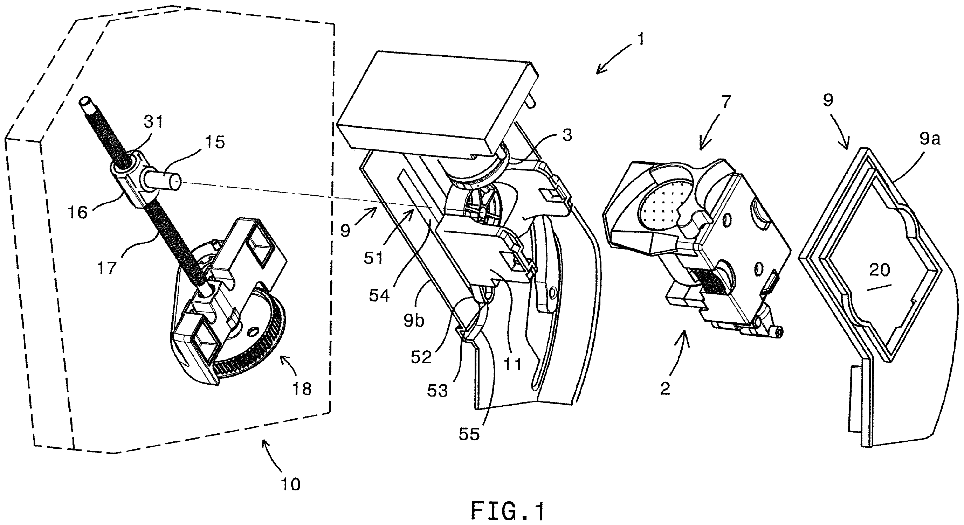

figure 1 shows an exploded view of the infuser unit;

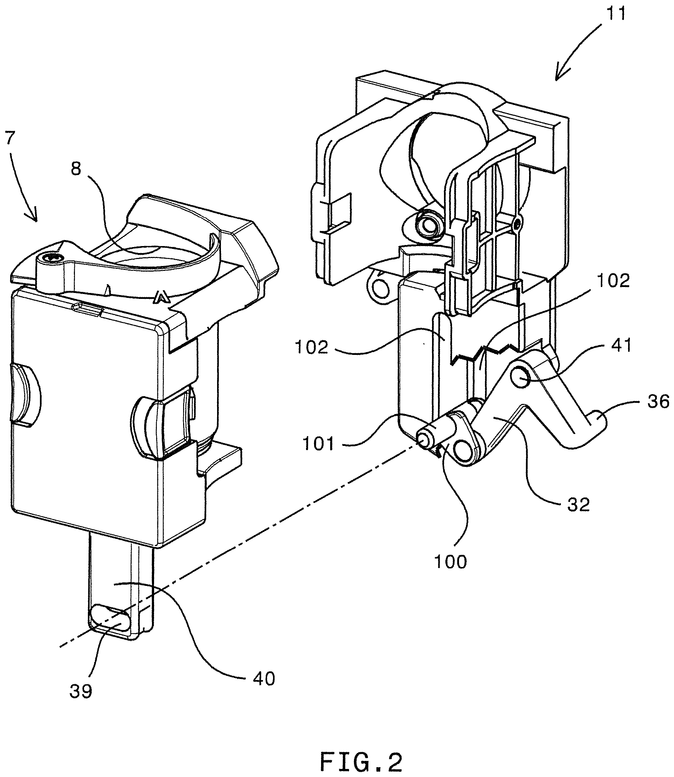

figure 2 shows a perspective view of the carriage, of the infusion cylinder separate from the carriage, and of the means for amplifying the movement of the ejection piston;

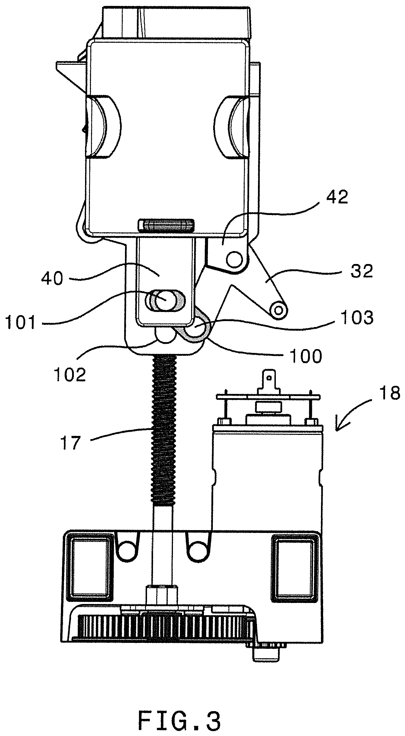

figure 3 shows a part of the infuser unit that illustrates the gear reducer for moving the carriage that supports the infusion cylinder;

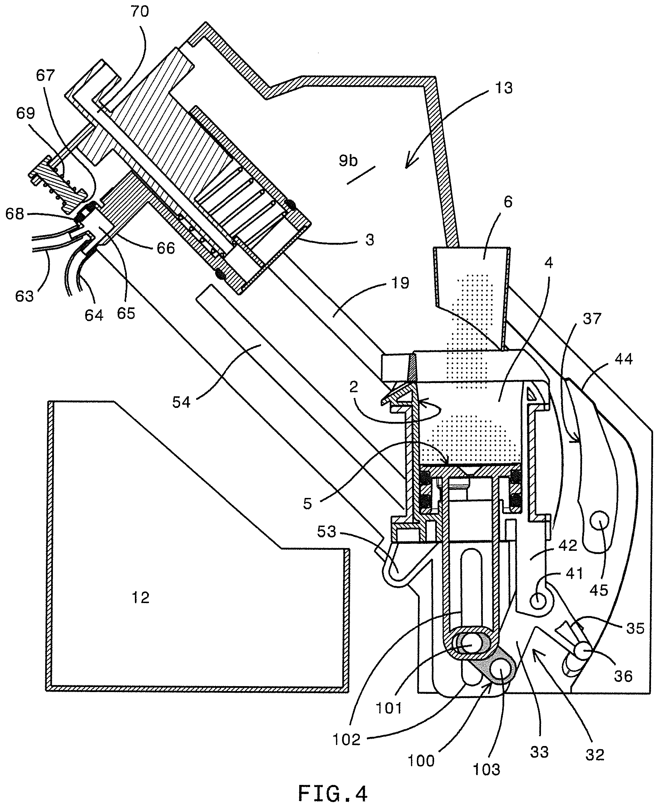

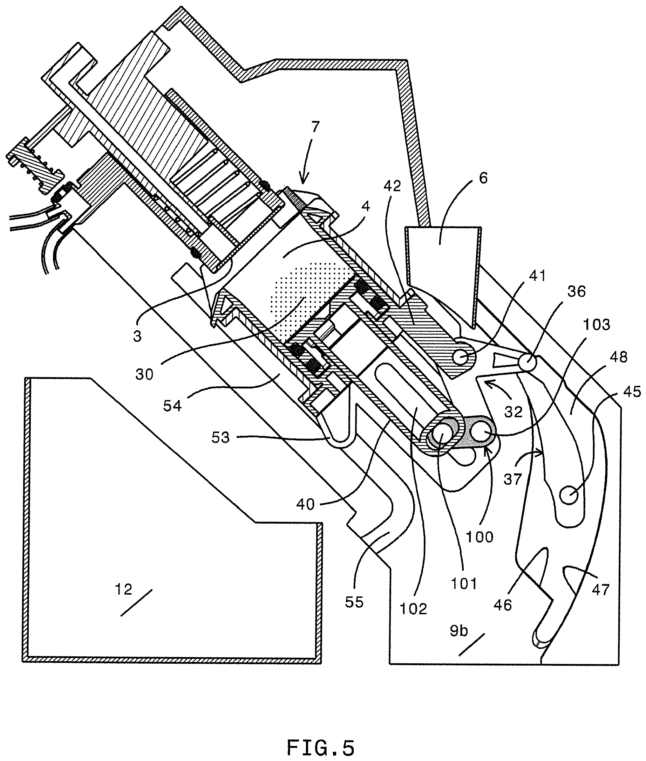

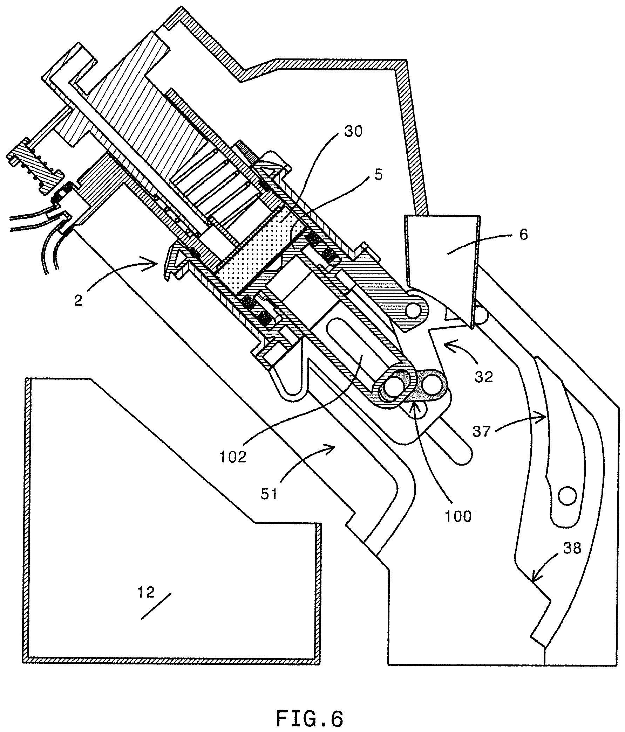

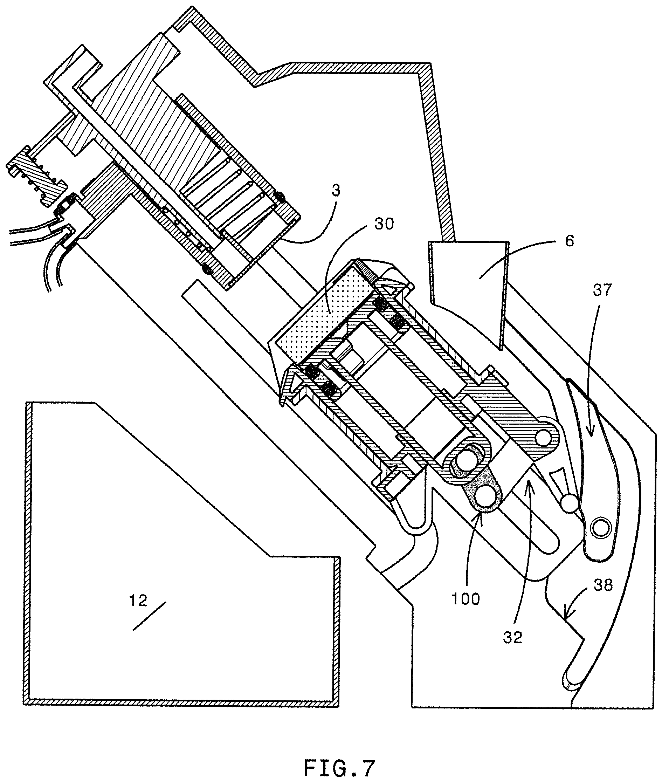

figures 4 to 7 show the sequence of the positions assumed by the infuser unit during a complete infusion cycle, wherein figure 4 shows the infusion cylinder in the position for loading a dose of coffee, figure 5 shows the infusion cylinder after the oscillation that aligns it with the closing piston, figure 6 shows the closing of the infusion chamber at the end of the upwards translation of the infusion cylinder, figure 7 shows the extraction of the ejection piston during the final portion of the downwards translation of the infusion cylinder.

With reference to the figures cited, an infuser unit of a coffee machine is shown and indicated in its entirety by reference number 1.

The infuser unit 1 comprises a hollow infusion cylinder 2 having an access mouth 8 engageable by a closing piston 3 for delimiting an infusion chamber 4 in which a dose of coffee 30 can be positioned, to be fed by a loader 6 and an ejection piston 5 for ejecting the spent dose of coffee grounds 30 from the infusion chamber 4.

The infusion cylinder 2 is subjectable to a reversible roto-translational stroke between a position for loading a dose of coffee 30, wherein it is disengaged from the closing piston 3 and has its axis inclined relative to the axis of the closing piston 3, and an infusion position, wherein it is engaged with the closing piston 3 and has its axis in the direction of the axis of the closing piston 3.

The ejection piston 5 can be moved by an oscillating rocker 32 so as to slide inside the infusion cylinder 2 in the direction of the axis of the infusion cylinder 2 between a retracted position and a projecting position for ejecting the spent dose of coffee grounds 30.

In particular but not necessarily, the oscillating rocker 32 is pivoted through an oscillation pin 41 to a lower extension 42 of the infusion cylinder 2. A means for amplifying the movement of the ejection piston 5 is provided, connecting the ejection piston 5 to the oscillating rocker 32.

The amplifying means amplifies the movement generated by the rocker 32.

Said amplifying means comprises in the embodiment illustrated a connecting rod 100 which has a first articulated connection with the ejection piston 5 and a second articulated connection with the rocker 32.

The first articulated connection comprises a first pin 101 engaged in a slot 39.

The first pin 101 is supported by a first end of the connecting rod 100.

The slot 39 is afforded on a rod 40 of the ejection piston 5.

The slot 39 extends transversely to the axis of the ejection piston 5.

Advantageously a sliding guide 102 is provided for the first pin 101 along the axial direction of the ejection piston 5.

The sliding guide 102 is afforded in the body of a carriage 11 that supports the infusion cylinder 2.

In particular, the infusion cylinder 4 is coupled in a releasable manner to the carriage 11.

The carriage 11 is slidable in the direction of the axis of the closing piston 3 and can oscillate with an oscillation axis oriented in the direction of the oscillation axis of the rocker 32.

The provision of the sliding guide 102 advantageously allows the thrust or traction on the ejection piston 5 to be maintained in a purely axial direction by the connecting rod 100 hence discharging the transversal force components directly onto the carriage 11.

The stem 40 of the ejection piston 5 is therefore free from bending stress that could complicate its correct operation.

The second articulated connection is in the form of a hinge.

The hinge has a second pin 103 supported by a second end of a connecting rod 100.

The second pin 103 is parallel to the oscillation axis of the rocker 32.

The second pin 103 constrains the second end of the connecting rod 100 to a first arm 33 of the rocker 32 having in turn a second arm 35 provided with a member 36 for picking up the oscillating movement.

The infuser unit 1 preferably has a shell 9 formed in particular but not necessarily by two half-parts 9a, 9b, associated with one another that delimit a compartment 13 for the reversible movement of the infusion cylinder 2.

The shell 9 is fixed to the framework 10 that supports the bodywork and the other components of the coffee machine, or in a different embodiment not shown it constitutes directly the framework that supports the bodywork and the other components of the coffee machine.

The closing piston 3 can be fixed to the shell 9 or to the framework 10 and projects into the compartment 13 with the orientation of its own axis inclined with respect to the support plane of the coffee machine.

The shell 9 or the framework 10 also support the loader 6 and a collector 12 for collecting spent coffee grounds.

The infuser unit 1 further comprises a scraper element 7 for scraping the access mouth 8 of the infusion cylinder that can be activated to remove the spent coffee grounds when the ejection piston 5 is in the projecting position.

The shell 9 is preferably but not necessarily provided in particular in its half-part 9a with a window 20 through which the infusion cylinder 2 can be extracted from the compartment 13 once it has been removed from the carriage 11. The window 20 is accessible directly from the outside of the machine.

The carriage 11 is oscillatably supported by a pin 15 that is in turn supported by a slider 16 having internally a nut-screw 31 engaged with a worm screw 17 oriented in the direction of the axis of the closing piston 3 and movable by a gear reducer 18.

For performing the oscillation of the carriage 11 the half-part 9b of the shell 9 has a cam in the form of a slot 51 in which a pin 52 is engaged supported by an extension 53 of the carriage 11. The slot 51 has a rectilinear section 54 oriented in the direction of the axis of the closing piston 3 and a curvilinear portion 55.

The movement unit of the slider 16, comprising the gear reducer 18 and the worm screw 17, is supported by the framework 10 outside the shell 9.

The slider 16 is arranged through a rectilinear slot 19 afforded through the wall thickness of the half-part 9b of the shell 9 and oriented in the direction of the axis of the closing piston 3.

The member 32 for picking up the movement of the second arm 35 of the rocker 32 cooperates selectively with a first control cam 37 configured and arranged so as to generate an oscillation of the rocker 32 in the direction that corresponds to the movement towards the projected position of the ejection piston 5 or with a second control cam 38 configured and arranged so as to generate an oscillation of the rocker 32 in the direction that corresponds to the movement towards the retracted position of the ejection piston 5.

The distance of the second pin 103 of the connecting rod 100 from the oscillation pin 41 of the rocker 32 is greater than the distance of the movement pick-up member 36 from the oscillation pin 41 of the rocker 32.

In this way the movement of the second pin 103 of the connecting rod 100 is amplified with respect to the movement of the movement pick-up member 36.

The first control cam 37 is afforded on a longitudinal element 43 that can oscillate in contrast and by the action of an elastic element (not shown) between a rest position against a stopping abutment 44 and a disengaged position from the stopping abutment 44.

The elastic element is configured and arranged so as to maintain the longitudinal element 43 normally pressed against the stopping abutment 44.

The longitudinal element 43 is pivoted to the shell 9, and in particular to its half-part 9b, through an oscillation pin 45 oriented in the direction of the oscillation axis of the rocker 32.

The second control cam 38 is afforded by an inclined plane 46 present in the shell 9, and in particular in its half-part 9b.

The shell 9, and in particular its half-part 9b, has a guide for the pick-up pin 36 defined by the lateral delimitation wall 47 of a lowered part 48 present in the internal side of the half-part 9b of the shell 9.

The elongated element 43 is also fully positioned in the lowered part 48.

The second control cam 38 and the stopping abutment 44 are afforded by shaped portions of the lateral delimitation surface 47 of the lowered part 48.

The infuser unit 1 is particularly but not necessarily of the known type having a system for conveying the coffee infusion towards a remote dispenser (not shown).

The conveying system has a first hose 63 and a second hose 64 in communication with one another through a chamber 65 afforded in a block 66 supported laterally by the closing piston 3. The first hose 63 is connected to the remote dispenser while the second hose 64 is connected to an outlet hole (not shown) of the coffee infusion from the infusion cylinder 2.

For discharging the coffee infusion still inside the hoses 63 and 64 a shutter 67 of a hole 68 is provided in a known way, adapted to place the hoses 63 and 64 in direct communication with the atmosphere.

The shutter 67 is movable in contrast and by the action of a spring 69 between a closed position of the hole 68 during infusion and an open position allocated for the opening of the hole 68 at the end of the infusion for discharging the residual coffee infusion by gravity.

The operation of the infuser unit 1 is as follows.

The infusion cylinder 2 is at the start of the stroke below the loader 6 with the axis in the vertical direction or slightly inclined with respect to the vertical direction. The ejection piston 5 is in the retracted position.

After the coffee powder has been loaded into the infusion cylinder 2, the gear reducer 18 activates in rotation the worm screw 17 along which the slider 16 translates due to the effect of coupling with the worm screw 17 through the nut-screw 31.

The carriage 11 pivoted on the slider 16 starts to draw the infusion cylinder 2 upwards.

During the initial part of the drawing upwards, the pin 52 travels along the curvilinear portion 55 of the cam 51 which causes the oscillation (anti-clockwise in the figures) of the carriage 11 and consequently of the infusion cylinder 2 until the axis of the latter is aligned with the axis of the closing piston 3.

In the subsequent upwards movement the infusion cylinder 2 maintains the same angular orientation given that the pin 52 travels along the rectilinear portion 54 of the cam 51.

During the upwards movement of the infusion cylinder 2 the pick-up pin 36 slides along the guide 47 and is wedged between the stopping abutment 44 and the elongated element 43 which yields compressing the elastic element by which it is activated allowing the passage of the pick-up pin 36. After the passage of the pick-up pin 36 the elongated element 43 is brought back against the stopping abutment 44 due to the effect of the extension of the elastic element against which it was previously compressed.

The infusion cylinder 2 then engages with the closing piston 3.

The infusion cylinder 2 stops in this position with the ejection piston 5 still in the retracted position.

For the infusion an internal conduit 70 of the closing piston 3 is fed with a flow of water especially heated by a specific boiler (not shown). The hot infusion water is injected into the infusion chamber and the resulting infusion is extracted through the relevant outlet hole provided in the infusion cylinder 2.

At the end of the infusion the downwards movement of the infusion cylinder 2 begins, made possible by the inversion of the movement transmitted by the gear reducer 18.

During the execution of the initial downwards translation the infusion cylinder 2 is disengaged from the closing piston 3 and the pick-up pin 36 is engaged with the first control cam 37 which remains locked against the stopping abutment 44. Due to the effect of the sliding along the first control cam 37, the pick-up pin 36 is subjected to a displacement force that causes the oscillation of the rocker 32 (in the clockwise direction in the drawings) about the oscillation pin 41. The oscillation of the rocker 32 is amplified by the connecting rod 100 and is thus transformed into a displacement of a substantial size of the ejection piston 5 towards the ejection position.

The infusion cylinder 2 concludes its descent with an oscillation opposite to the initial one, due to the effect of the engagement of the pin 52 with the curvilinear portion 55 of the slot 51, with which it is brought back into the position for loading a new dose of coffee 30.

During the oscillation of the infusion cylinder 2 the movement pick-up pin 36 is engaged with the second control cam 38 from which it receives a movement force that causes the oscillation of the rocker 32 (in the anti-clockwise direction in the drawings). The oscillation of the rocker 32 causes the ejection piston 5 to be drawn by the connecting rod 100 towards the retraction position.

The invention is particularly adapted for a coffee machine with a prevalently vertical extension wherein the infusion cylinder is placed below the closing piston and has an inclined translation movement with respect to the support plane of the coffee machine.

The particularly advantageous aspect of the invention consists of the provision of a construction of the infuser unit that can amplify the movement of the ejection piston 5 without changing the stroke of the infusion cylinder 4 so as to be able to increase the volumetric capacity of the infusion cylinder without having to increase the overall dimensions of the infuser unit itself.

The coffee machine will therefore be able to correctly dispense higher doses with a compact kinematic movement of the infusion cylinder and of the ejection piston and at the same time extremely solid and effective.

The infuser unit as conceived herein is susceptible to many modifications and variations, all falling within the scope of the invention as defined by the appended claims.

In practice the materials used, as well as the dimensions, can be any according to the needs and the state of the art.

## Claims

1. An infuser unit (1) for a coffee machine, comprising a closing piston (3), an infusion cylinder (2) subjectable to a reversible roto-translational stroke between a position for loading a dose of coffee (30), wherein it is disengaged from the closing piston (3) and has its axis inclined relative to the closing piston (3), and an infusion position, wherein it is engaged with the closing piston (3) and has its axis in the direction of the axis of the closing piston (3), an ejection piston (5) for ejecting the spent dose of coffee grounds (30), which is slidable inside the infusion cylinder (2) in the direction of the axis of the infusion cylinder (2) between a retracted position and a projecting position for ejecting the spent dose of coffee grounds (30), and an oscillating rocker (32) for moving said ejection piston (5), means for amplifying the movement of said ejection piston (5) connecting said ejection piston to said oscillating rocker (32), **characterised in that** said amplifying means comprises a connecting rod (100) which has a first articulated connection with said ejection piston (5) and a second articulated connection with said rocker (32), **in that** said first articulated connection comprises a first pin (101) engaged in a slot (39), and **in that** said slot (39) is formed on a rod (40) of said ejection piston (5).

2. The infuser unit (1) for a coffee machine according to the preceding claim, **characterised in that** said slot (39) extends transversely to the axis of said ejection piston (5).

3. The infuser unit (1) for a coffee machine according to any one of claims 1 to 2, **characterised in that** it envisages a sliding guide (102) for said first pin (101) along the axial direction of said ejection piston (5).

4. The infuser unit (1) for a coffee machine according to any one of claims 1 to 3, **characterised in that** said first pin (101) is supported by a first end of said connecting rod (100).

5. The infuser unit (1) for a coffee machine according to claim 3, **characterised in that** said sliding guide (102) is formed in the body of a carriage (11) which supports said infusion cylinder (2), said carriage (11) being slidable in the direction of the axis of the closing piston (3) and oscillatable with an oscillation axis oriented in the direction of the oscillation axis of said rocker (32).

6. The infuser unit (1) for a coffee machine according to any one of claims 1 to 5, **characterised in that** said second articulated connection comprises a hinge.

7. The infuser unit (1) for a coffee machine according to the preceding claim, **characterised in that** said hinge has a second pin (103) supported by a second end of said connecting rod (100).

8. The infuser unit (1) for a coffee machine according to the preceding claim, **characterised in that** said second pin (103) is parallel to the oscillation axis of said rocker (32).

9. The infuser unit (1) for a coffee machine according to either of claims 7 and 8, **characterised in that** said second pin (103) constrains said second end of said connecting rod (100) to a first arm (33) of said rocker (32) having in turn a second arm (35) provided with a member (36) for picking up the oscillating movement.

## Patentansprüche

1. Brüheinheit (1) für eine Kaffeemaschine, umfassend einen Verschließkolben (3), einen Brühzylinder (2), der einem reversierbaren Drehschiebehub zwischen einer Position zum Laden einer Kaffeedosis (30), in der er vom Verschließkolben (3) gelöst ist und seine Achse relativ zum Verschließkolben (3) geneigt ist, und einer Brühposition, in der er mit dem Verschließkolben (3) im Eingriff ist und seine Achse in Richtung der Achse des Verschließkolbens (3) verläuft, unterzogen werden kann, einen Auswurfkolben (5) zum Auswerfen der verbrauchten Dosis Kaffeesatz (30), der im Brühzylinder (2) in Richtung der Achse des Brühzylinders (2) zwischen einer eingefahrenen und einer vorstehenden Position für den Auswurf der verbrauchten Dosis Kaffeesatz (30) verschiebbar ist, und einen Schwenkhebel (32) zum Bewegen des Auswurfkolbens (5), Mittel zur Verstärkung der Bewegung des Auswurfkolbens (5), die den Auswurfkolben mit dem Schwenkhebel (32) verbinden, **dadurch gekennzeichnet, dass** die Verstärkungsmittel eine Verbindungsstange (100) umfassen, die eine erste Gelenkverbindung mit dem Auswurfkolben (5) und eine zweite Gelenkverbindung mit dem Hebel (32) umfasst, und dadurch, dass die erste Gelenkverbindung einen ersten Zapfen (101) umfasst, der in eine Nut (39) eingreift, und dadurch, dass diese Nut (39) auf einer Stange (40) des Auswurfkolbens (5) ausgebildet ist.

2. Brüheinheit (1) für eine Kaffeemaschine nach dem vorhergehenden Anspruch, **dadurch gekennzeichnet, dass** sich die Nut (39) quer zur Achse des Auswurfkolbens (5) erstreckt.

3. Brüheinheit (1) für eine Kaffeemaschine nach einem der Ansprüche 1 bis 2, **dadurch gekennzeichnet, dass** sie eine Gleitführung (102) für den ersten Zapfen (101) entlang der axialen Richtung des Auswurfkolbens (5) aufweist.

4. Brüheinheit (1) für eine Kaffeemaschine nach einem der Ansprüche 1 bis 3, **dadurch gekennzeichnet, dass** der erste Zapfen (101) von einem ersten Ende der Verbindungsstange (100) getragen wird.

5. Brüheinheit (1) für eine Kaffeemaschine nach Anspruch 3, **dadurch gekennzeichnet, dass** die Gleitführung (102) im Körper eines Wagens (11) ausgebildet ist, der den Brühzylinder (2) trägt, wobei der Wagen (11) in Richtung der Achse des Verschließzylinders (3) verschiebbar und schwenkbar ist, mit einer Schwenkachse, die in Richtung der Schwenkachse des Hebels (32) ausgerichtet ist.

6. Brüheinheit (1) für eine Kaffeemaschine nach einem der Ansprüche 1 bis 5, **dadurch gekennzeichnet, dass** die zweite Gelenkverbindung ein Scharnier umfasst.

7. Brüheinheit (1) für eine Kaffeemaschine nach dem vorhergehenden Anspruch, **dadurch gekennzeichnet, dass** das Scharnier einen zweiten Zapfen (103) aufweist, der von einem zweiten Ende der Verbindungsstange (100) getragen wird.

8. Brüheinheit (1) für eine Kaffeemaschine nach dem vorhergehenden Anspruch, **dadurch gekennzeichnet**, der zweite Zapfen (103) parallel zur Schwenkachse des Hebels (32) angeordnet ist.

9. Brüheinheit (1) für eine Kaffeemaschine nach Anspruch 7 und 8, **dadurch gekennzeichnet, dass** der zweite Zapfen (103) das zweite Ende der Verbindungsstange (100) am ersten Arm (33) des Hebels (32) befestigt, aufweisend wiederum einen zweiten Arm (35), versehen mit einem Element (36) zur Aufnahme der Schwenkbewegung.

## Revendications

1. Unité d'infusion (1) pour une machine à café, comprenant un piston de fermeture (3), un cylindre d'infusion (2) pouvant être soumis à une course de rotation/translation réversible entre une position de chargement d'une dose de café (30), dans laquelle il est désengagé du piston de fermeture (3) et comporte son axe incliné par rapport au piston de fermeture (3), et une position d'infusion, dans laquelle il se met en prise avec le piston de fermeture (3) et comporte son axe dans la direction de l'axe du piston de fermeture (3), un piston d'éjection (5) servant à éjecter la dose utilisée de marc de café (30), pouvant coulisser à l'intérieur du cylindre d'infusion (2) dans la direction de l'axe du cylindre d'infusion (2) entre une position rétractée et une position saillante servant à éjecter la dose utilisée de marc de café (30), et un balancier oscillant (32) servant à déplacer ledit piston d'éjection (5), des moyens servant à amplifier le mouvement dudit piston d'éjection (5) reliant ledit piston d'éjection au dit balancier oscillant (32), **caractérisé en ce que** ledit moyen d'amplification comprend une bielle (100) ayant un premier raccordement articulé avec ledit piston d'éjection (5) et un second raccordement articulé avec ledit balancier (32), **en ce que** ledit premier raccordement articulé comprend un premier axe (101) engagé dans une fente (39), et **en ce que** ladite fente (39) est formée sur une tige (40) dudit piston d'éjection (5) .

2. Unité d'infusion (1) pour une machine à café selon la revendication précédente, **caractérisée en ce que** ladite fente (39) se prolonge transversalement à l'axe dudit piston d'éjection (5) .

3. Unité d'infusion (1) pour une machine à café selon l'une quelconque des revendications 1 à 2, **caractérisée en ce qu'**elle prévoit un guide coulissant (102) pour ledit premier axe (101) le long de la direction axiale dudit piston d'éjection (5) .

4. Unité d'infusion (1) pour une machine à café selon l'une quelconque des revendications de 1 à 3, **caractérisée en ce que** ledit premier axe (101) est supporté par une première extrémité de ladite bielle (100) .

5. Unité d'infusion (1) pour une machine à café selon la revendication 3, **caractérisée en ce que** ledit guide coulissant (102) est formé dans le corps d'un chariot (11) supportant ledit cylindre d'infusion (2), ledit chariot (11) pouvant coulisser dans la direction de l'axe du piston de fermeture (3) et pouvant osciller avec un axe d'oscillation orienté dans la direction de l'axe d'oscillation dudit balancier (32).

6. Unité d'infusion (1) pour une machine à café selon l'une quelconque des revendications de 1 à 5, **caractérisée en ce que** ledit second raccordement articulé comprend une charnière.

7. Unité d'infusion (1) pour une machine à café selon la revendication précédente, **caractérisée en ce que** ladite charnière comporte un second axe (103) supporté par une seconde extrémité de ladite bielle (100) .

8. Unité d'infusion (1) pour une machine à café selon la revendication précédente, **caractérisée en ce que** ledit second axe (103) est parallèle à l'axe d'oscillation dudit balancier (32).

9. Unité d'infusion (1) pour une machine à café selon l'une quelconque des revendications 7 et 8, **caractérisée en ce que** ledit second axe (103) contraint ladite seconde extrémité de ladite bielle (100) à un premier bras (33) dudit balancier (32) ayant à son tour un second bras (35) pourvu d'un élément (36) servant à saisir le mouvement oscillant.
